Europäisches Patentamt

(19) European Patent Office

Office européen des brevets

(11) Publication number: **0 224 340**
**B1**

(12) **EUROPEAN PATENT SPECIFICATION**

(45) Date of publication of the patent specification:
13.06.90

(51) Int. Cl.⁵: **C01B 17/80**

(21) Application number: **86308428.1**

(22) Date of filing: **29.10.86**

(54) Sulphur trioxide absorption tower and process.

(30) Priority: **21.11.85 US 800294**

(43) Date of publication of application:
**03.06.87 Bulletin 87/23**

(45) Publication of the grant of the patent:
**13.06.90 Bulletin 90/24**

(84) Designated Contracting States:
**DE FR GB**

(56) References cited:
**DE-A- 2 050 580**
**DE-A- 3 320 527**
**GB-A- 687 160**
**US-A- 2 115 091**

(73) Proprietor: **C-I-L Inc., 90 Sheppard Avenue East, North York Ontario M2N 6H2(CA)**

(72) Inventor: **Cameron, Gordon Murray, 4 Wellesbourne Crescent, North York Ontario, M2H 1Y7(CA)**

(74) Representative: **Oldroyd, Alan et al, Imperial Chemical Industries PLC Legal Department: Patents PO Box 6 Bessemer Road, Welwyn Garden City Herts, AL7 1HD(GB)**

ACTORUM AG

## Description

This invention relates to processes and apparatus for the generation of enriched sulphuric acid by the absorption of sulphur trioxide in sulphuric acid.

In the manufacture of sulphuric acid from sulphur dioxide in the classical contact process, a dry sulphur dioxide gas is obtained which is passed through a series of catalyst beds in which essentially all of the sulphur dioxide is converted to sulphur trioxide. The sulphur trioxide is then absorbed into sulphuric acid in one or more absorption towers to provide an enriched sulphuric acid stream.

Typically, the sulphur trioxide gas stream from the catalytic converter beds contains 5 - 13% by volume of sulphur trioxide and is generally cooled to a temperature in the order of 160 - 260°C prior to the absorption stage. The sulphur trioxide is typically removed from the gaseous stream by countercurrent absorption with sulphuric acid within a brick lined packed absorption tower.

In consequence of the very large quantities of heat generated by the absorption of the sulphur trioxide and of the desire to avoid the throughput of unabsorbed sulphur trioxide in the effluent gas stream, absorption towers require a large acid throughput flow if overly hot, corrosive acid is to be avoided. Further, it is also desirable that broad acid concentration ranges be avoided through the use of sufficiently large absorber acid flow. Typically, an acid product removal stream may represent only 5 - 10% of the circulating acid stream contained within the absorption tower packing and ancillary piping. Using materials which are economically available, acid temperatures typically range up to 120°C.

Countercurrent downward acid flow and upwards gas flow through the tower packing requires the tower to be designed to provide sufficient empty space to allow the two fluids to interact and pass each other and to avoid the situation known as "flooding" wherein the gas flow prevents liquid drainage through the packing. This problem is most serious where the gas first enters the packing because this is where the gas flow is largest due to the sulphur trioxide present in the gas and the hottest (thus, lowest density) and results in the largest volume of gas to flow through the void spaces in the packing. Compounding the problem is that the downward liquid flow is also largest in the lower packing region as a result of the acid absorbing most of the sulphur trioxide from the gas in this region.

Absorption towers of present design require distributors at the top of the packing in order to spread the incoming absorbing acid over the packing so that all of the surfaces of the packing is wetted to effect maximum absorption of the sulphur trioxide.

A serious disadvantage of conventional absorption towers is the need for thick brick linings within the tower in order to avoid the presence of hot tower shells and hot linings behind the brick. Hot gas (160 - 260°C) is fed, typically, into the lower region of the tower immediately adjacent the brick lining - which is, disadvantageously, only intermittently wetted. Such brick linings add to the cost of a tower and are difficult to install properly.

In addition, there are, typically, two conflicting needs which must be satisfied in the removal of sulphur trioxide by acid absorption. There is a need for the gross removal of sulphur trioxide from the gas without exceeding the concentration and temperature limits set on the sulphuric acid used, and a second need for removing substantially all of the sulphur trioxide in the gas to efficiency levels approaching 99.9% and higher.

The first need is normally achieved in the bottom 15 – 20% of the packing in the tower, i.e. the first part of the packing which contacts the inlet gas. This need determines the tower diameter and is thus a fundamental factor in tower costs. The remaining 80 – 85% of the packing effects the sulphur trioxide absorption to the high levels required by environmental authorities and for which there is no need for such a large diameter tower or large acid flow.

Thus, there is a further disadvantage in conventional absorption towers in that the towers are oversized at the top in relation to the remaining part of the tower and the gas density and flow and acid flow in that upper part.

It is also known in the prior art to provide absorption stages with multi-staged absorption zones. DE 2 050 581 discloses the use of a first absorption stage for the absorption of sulphur trioxide in a vertical Venturi absorber in direct current between the injected sulphuric acid and the introduced gaseous medium. However, the sulphuric acid production plant would thus require that the tower design be amended to include the Venturi absorbers.

GB 687 160 describes a multistage absorption tower wherein dried air is added to the tower between the absorption zones. This system would require the addition of an additional packed zone within the tower and does little to overcome the disadvantage of conventional absorption towers in that the tower is oversized at the top as discussed hereinabove.

Modern processes for the manufacture of sulphuric acid using the double absorption system have two absorber towers, each of which suffer from the above disadvantages.

It is an object of the present invention to provide an absorption tower and process wherein the tower size and acid circulation rate in the tower packing region are reduced below conventional size.

It is a further object of the invention to reduce the detrimental effect of the gas on the materials of construction in the bottom of the tower so that thinner or no brick linings may be used.

Accordingly, in one of its aspects, the invention provides a sulphur trioxide absorption tower comprising

(a) a shell;
(b) a sulphur trioxide packed absorption zone within said shell;
(c) means for feeding a sulphuric acid stream to said packed absorption zone; and
(d) means for collecting a resultant gas stream from said packed absorption zone; wherein the improvement to said tower is characterized in that said tower also comprises

(e) a sulphuric acid spray chamber within a lower part of said shell and below said packed absorption zone;

(f) means for spraying a sulphuric acid stream within said spray chamber;

(g) means for feeding a hot gas stream containing sulphur trioxide to said spray chamber wherein a depleted sulphur trioxide gas stream is produced;

(h) means for feeding said depleted sulphur trioxide gas stream to said packed absorption zone; and

(i) means for collecting said sulphuric acid streams from said spray chamber and said absorption zone.

In a preferred feature the invention provides a tower as hereinbefore defined further comprising a side spray chamber external of said tower and connected to said sulphuric acid spray chamber.

In a further aspect, the invention provides a process for producing concentrated sulphuric acid from a hot gas stream containing sulphur trioxide, comprising:

(a) feeding said gas stream to a sulphuric acid spray chamber contained within an absorption tower;

(b) spraying a first recycled sulphuric acid stream within said spray chamber to effect absorption of a major portion of said sulphur trioxide from said gas stream into said recycled sulphuric acid to produce a first enriched sulphuric acid stream and a depleted sulphur trioxide stream;

(c) feeding said depleted sulphur trioxide gas stream to a sulphur trioxide packed absorption zone above said spray chamber within said absorption tower;

(d) feeding a second recycled sulphuric acid stream to said sulphur trioxide absorption zone to effect absorption of substantially all of said sulphur trioxide remaining in said depleted sulphur trioxide gas stream to produce a second enriched sulphuric acid stream and a substantially sulphur trioxide-free gas stream;

(e) collecting said first and second enriched sulphuric acid streams; and

(f) collecting said substantially sulphur trioxide-free gas stream, characterized in that said first recycled sulphuric acid stream is sprayed in countercurrent fashion.

The first and second recycled acid streams fed to the spray chamber and the packed absorption zone, respectively, may come from a direct common source, or each may emanate from a suitable and distinct acid circuit found within a full suphuric acid manufacturing plant. For example, the recycled acid to the packed absorption tower may be fed also from either a drying, primary or final tower acid circuit or any combination thereof. The acid fed to the spray chamber may emanate from any of the above packed absorption zone acid sources or yet a further separate circuit. Preferably, the two feed acids emanate from a common source of circulating acid with the volume of spray chamber acid being greater than the volume of packed absorption zone acid.

Thus, in a preferred feature the invention provides a process as hereinbefore defined wherein said first recycled sulphuric acid stream constitutes a major portion of a recycled commmon sulphuric acid stream and said second recycled sulphuric acid stream constitutes a minor portion of said recycled common sulphuric acid stream.

The relative amounts of recycled acid fed to the packed absorption zone and spray chamber is determined by the acid temperatures and concentrations of the enriched acid streams desired. Under normal operating conditions, the acid flow requirement to the spray chamber will normally exceed that to the packed absorption zone. However, in the case where energy recovery or other considerations are of concern, it is possible that the relative flow relationship may vary such that the reverse is true. One such case would be when very hot acid from the spray chamber is desired which would call for a reduced volume of feed recycled acid to the spray chamber.

The two enriched acid streams may either be combined within the tower to exit as an admixture of acids, or be run off the tower as distinct streams emanating from the packed absorption zone and spray chamber, separately. In the former case, in which the two enriched acid streams are combined, it is deemed that this results in a "common" circuit of acid transfer insofar as it relates to the process according to the invention. On the other hand, by the term "separate" circuit is meant that there is no direct mixing of the enriched acid streams exiting from the packed absorption zone and spray chamber.

Thus, it can be seen that the enriched acids produced in the two distinct regions of the tower may be optionally combined either together and/or with any other appropriate acid circulating within a full sulphuric acid plant.

In a preferred feature the enriched acid from the packed absorption zone is allowed to pass through the spray chamber and thus becomes combined with the enriched acid from the spray chamber.

In order that the invention may be better understood, preferred embodiments according to the invention will now be described, by way of example only, with reference to the accompanying drawings wherein:

Figure 1 shows a vertical sectional view of a sulphur trioxide absorption tower according to the invention;

Figure 2 shows a schematic sectional view of an array of acid sprayers disposed within the tower of Figure 1;

Figure 3 shows a vertical sectional view of the tower of Figure 1 provided with a side array of acid sprayers, and

Figures 4, 5 and 6 show, schematically, acid circulation systems associated with an absorption tower according to the invention.

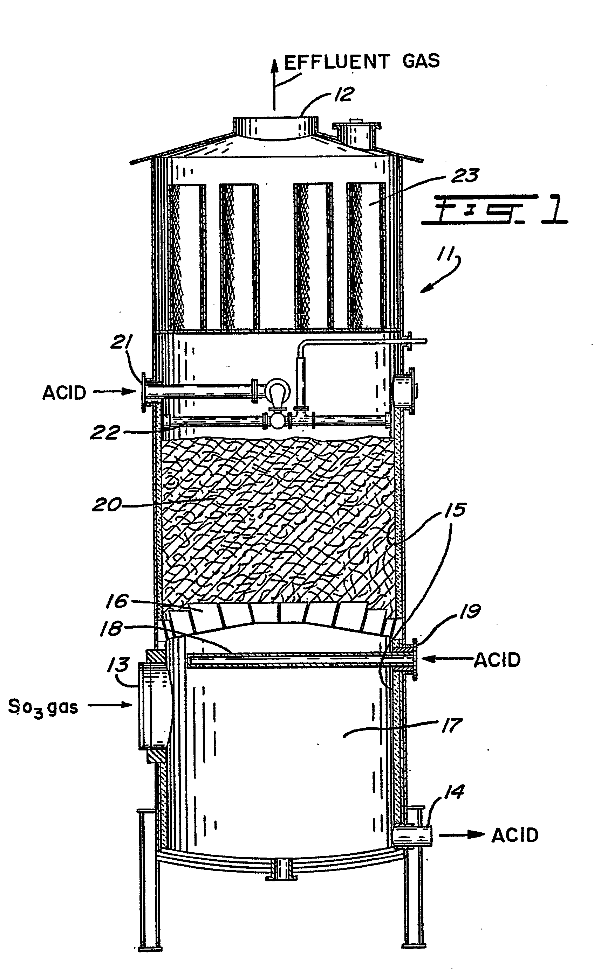

The absorption tower shown in Figure 1 comprises a carbon steel shell 11 having an effluent gas outlet 12 at the top and a hot gas inlet 13 and an acid outlet 14 at the bottom.

Shell 11 at its lower part has an inner lining 15 formed of acid resistant brick and a ceramic support 16, which together with the bottom of the shell define a sulphuric acid spray chamber 17. Disposed within chamber 17 is an array of acid distribution sprayers 18 leading from an acid inlet 19.

Within shell 11 above support 16 is a sulphur trioxide absorption zone 20 packed with ceramic saddle packing through which gas and acid may percolate to produce a full and intimate contact therebetween.

Shell 11 at an upper part has an acid inlet 21 and a cast iron acid distributor 22 above which is a mist eliminator 23 formed of glass fibre contained in a stainless steel frame.

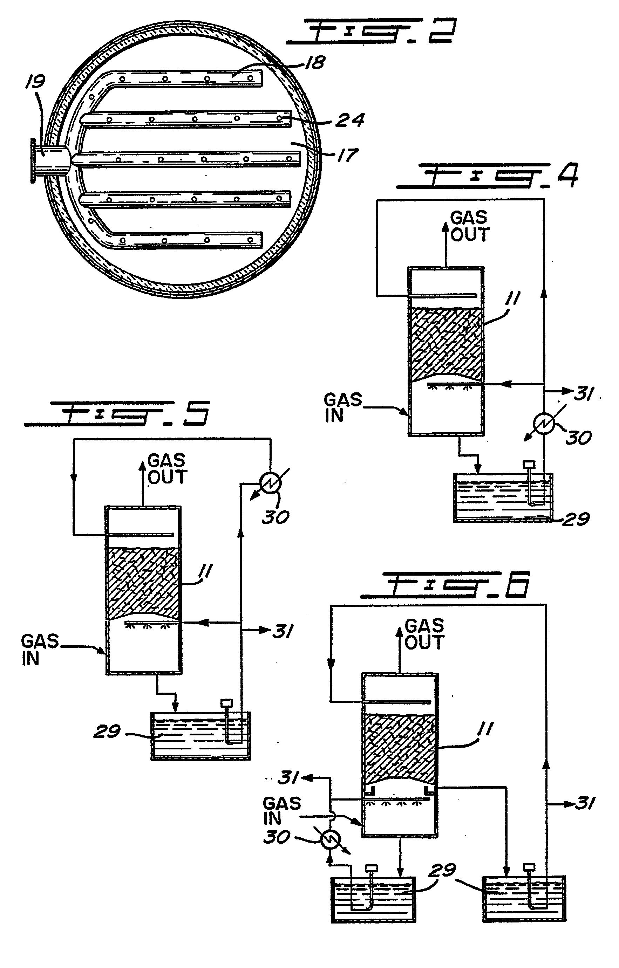

Figure 2 shows the array of acid sprayers 18 constituted as a plurality of parallel pipes having a plurality of low pressure drop nozzles 24. An alternative array of sprayers may be arranged as a radial array of nozzles within the spray chamber.

The spray array constituting the means for spraying sulphuric acid within spray chamber 17 could, in alternative embodiments, produce acid as co-current, countercurrent or cross-flow streams as there is no back pressure of sulphur trioxide over the sulphuric acid. The array of sprayers would be, typically, inspectable and replaceable.

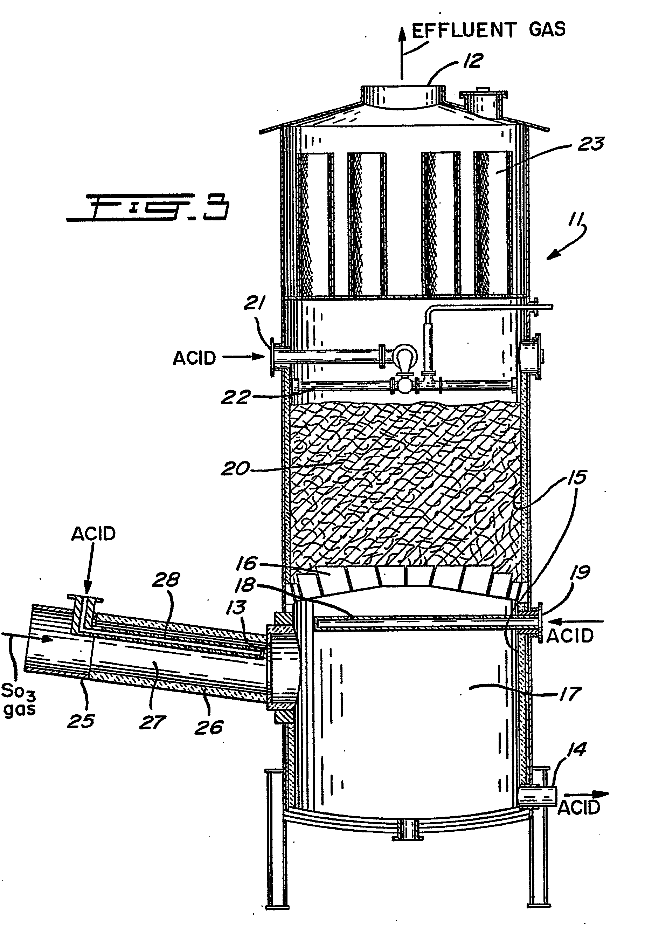

Figure 3 shows a more preferred absorption tower according to the invention in which shell 11 of Figure 1 has been modified to have affixed thereto a hot gas conduit 25 formed of steel and lined with acid resistant brick 26. The sides of conduit 25 define a side spray chamber 27 external of the tower and within which chamber 26 is a side array of acid sprayers 28.

In an alternative form of the tower of Figure 3 the spray array may be disposed within an external enlarged downflowing vertical duct to treat the hot sulphur trioxide gas prior to entry to the tower.

Figure 4 shows a recycled common acid circuit associated with an absorption tower wherein the first and second enriched sulphuric acid streams from the spray chamber and packed absorption zone, respectively, are combined within the tower and run off to pump tank 29. Acid from tank 29 is recirculated and cooled through heat exchanger 30 to spray chamber 17 and packed absorption zone 20 in major and minor amounts respectively. A product take-off line 31 is suitably located as shown.

Figure 5 shows an alternative recycled common acid circuit wherein the heat exchanger 30 is positioned after the spray chamber acid stream take-off point and prior to packed absorption zone entry. Such an arrangement permits higher temperatures to be optionally attained by the bulk of the total recirculating acid.

Figure 6 shows separate acid recirculation circuits for the packed absorption zone and spray chamber. A separate feed and acid circuit for the spray chamber permits higher temperature enriched acid to be produced for higher energy recovery.

In operation, the towers according to the invention represent primary absorbers of use in a typical 1814 tonne per day sulphuric acid plant, which receive a sulphur trioxide gas stream at 200°C obtained from the 93% conversion of a 12% sulphur dioxide stream.

With reference to Figures 1 and 4, a common recirculating acid flow of 908 m³/min. overall enters the tower at 80°C and 98.5% strength. A major portion (568 m³/min.) is fed to the spray chamber and a minor portion (340 m³/min.) to the packed absorption tower.

In the embodiments shown the diameter of the tower across the packed absorption zone measures 6.5 m. and requires only a 3 m. depth of typical 7.5 cm saddle packing. This is to be contrasted with the need for a 6.5 m. depth of packing in a tower of conventional design to achieve the same performance of sulphur trioxide removal.

The acid leaving the bottom of the tower through outlet 14 typically leaves at 120°C and of 99.2% strength. The sulphur trioxide absorption efficiency is, typically, in excess of 99.99%.

In a modified process, with reference to Figures 1 and 5 the recirculating sulphuric acid entering the tower through packed absorption zone inlet 21 is at a lower temperature than that entering through spray chamber inlet 19. The acid flow through inlet 19 may be cooled only to 100°C whereas that through inlet 21 cooled to 80°C. In this case, 84% of the total heat is now available for heat transfer above 100°C in contrast to only 51% of the total heat as seen in the first example process wherein both acid flows were cooled to 80°C.

The advantage in heat removal by separation of the two duties allows of significant design flexibility not present in conventional single tower concepts.

Thus, it can be seen that the improvement in sulphur trioxide absorption in sulphuric acid provided by the present invention lies in the use of sprays of absorbing acid to pre-absorb sulphur trioxide from the gas stream prior to entering the packing mass, with such sprays being located typically in the space below the packing and optionally, in the inlet gas duct. The acid stream used for the sprays is the main portion of the recirculating acid in the absorbing system, with the minor portion being used to irrigate the absorption tower packing.

Many advantages stem from the pre-absorption process described hereinabove.

First, the brick or metal in the initial gas zone in which sprays are used is continually irrigated with cool acid, which protect the linings behind the brick. Also, thinner brick linings can be used, which result in savings in capital cost.

In alternative embodiments, the use of recently developed corrosion resistant metals in the initial gas zone of the tower in the practise of the invention allows for the complete elimination of acid brick.

A second advantage lies in the use of a tower of smaller size as a result of the reduced gas flow, higher gas density, and reduced liquid flow required over the packing. Typically, tower diameter can be reduced up to 25% for the process according to the invention.

A third advantage lies in the reduction in acid flow in the distribution system, which allows of the use of smaller pipe, and the like to the tower top.

Yet a further advantage lies in the ability to vary the acid flow to the sprays in response to changes in sulphur trioxide absorption while leaving the irrigation over the packing unchanged. Conventional distributors are not readily turned down in flow whereas spray systems can be designed which can operate at reduced pressure or with individual nozzles shut off if needed. This advantage is particularly useful if energy recovery is to be practiced in the absorption process.

A still further advantage lies in the separation of the main heat removal operation associated with the sprays, where a low acid temperature is not essential, from the cooling in the packing where good cooling is required.

## Claims

1. A process for producing concentrated sulphuric acid from a hot gas stream containing sulphur trioxide, comprising:
a) feeding said gas stream to a sulphuric acid spray chamber contained within an absorption tower;
b) spray ing a first recycled sulphuric acid stream within said spray chamber to effect absorption of a major portion of said sulphur trioxide from said gas stream into said recycled sulphuric acid to produce a first enriched sulphuric acid stream and a depleted sulphur trioxide stream;
c) feeding said depleted sulphur trioxide gas stream to a sulphur trioxide packed absorption zone above said spray chamber within said absorption tower;
d) feeding a second recycled sulphuric acid stream to said sulphur trioxide absorption zone to effect absorption of substantially all of said sulphur trioxide remaining in said depleted sulphur trioxide gas stream to produce a second enriched sulphuric acid stream and a substantially sulphur trioxide-free gas stream;
e) collecting said first and second enriched sulphuric acid streams; and
f) collecting said substantially sulphur trioxide-free gas stream,
characterised in that said first recycled sulphuric acid stream is sprayed in countercurrent fashion.

2. A process as claimed in claim 1 wherein said first recycled sulphuric acid stream constitutes a major portion of a recycled common sulphuric acid stream and said second recycled sulphuric acid stream constitutes a minor portion of said recycled common sulphuric acid stream.

3. A process as claimed in claim 1 wherein said first and second enriched sulphuric acid streams are combined.

4. A process as claimed in any one of claims 1, 2 or 3 further comprising spraying said gas stream with a part of said first recycled sulphuric acid within a side spray chamber external of said tower and connected to said sulphuric acid chamber, prior to feeding said gas stream to said sulphuric acid chamber.

5. A sulphur trioxide absorption tower comprising
a) a shell;
b) a sulphur trioxide packed absorption zone within said shell;
c) means for feeding a sulphuric acid stream to said packed absorption zone; and
d) means for collecting a resultant gas stream from said packed absorption zone; wherein the improvement to said tower is characterized in that said tower also comprises
e) a sulphuric acid spray chamber within a lower part of said shell and below said packed absorption zone;
f) means for spraying a sulphuric acid stream within said spray chamber;
g) means for feeding a hot gas stream containing sulphur trioxide to said spray chamber wherein a depleted sulphur trioxide gas stream is produced;
h) means for feeding said depleted sulphur trioxide gas stream to said packed absorption zone; and
i) means for collecting said sulphuric acid streams from said spray chamber and said absorption zone.

6. A tower as claimed in claim 5 further comprising a side spray chamber external of said tower and connected to said sulphuric acid spray chamber.

## Patentansprüche

1. Verfahren zur Herstellung von konzentrierter Schwefelsäure aus einem heißen Gasstrom, der Schwefeltrioxid enthält, bei dem
(a) der Gasstrom einer Schwefelsäure-Zerstäubungskammer zugeführt wird, die in einem Absorptionsturm enthalten ist,
(b) ein erster zurückgeführter Schwefelsäurestrom in der Zerstäubungskammer zerstäubt wird, um eine Absorption eines größeren Anteils des Schwefeltrioxids aus dem Gasstrom in die zurückgeführte Schwefelsäure zu bewirken, so daß ein erster angereicherter Schwefelsäurestrom und ein verarmter Schwefeltrioxidstrom erzeugt werden,
(c) der verarmte Schwefeltrioxidgasstrom einer mit Füllkörpern gefüllten Schwefeltrioxid-Absorptionszone, die sich in dem Absorptionsturm oberhalb der Zerstäubungskammer befindet, zugeführt wird,
(d) ein zweiter zurückgeführter Schwefelsäurestrom der Schwefeltrioxid-Absorptionszone zugeführt wird, um eine Absorption im wesentlichen des ganzen in dem verarmten Schwefeltrioxidgasstrom zurückgebliebenen Schwefeltrioxids zu bewirken, so daß ein zweiter angereicherter Schwefelsäurestrom und ein im wesentlichen schwefeltrioxidfreier Gasstrom erzeugt werden,
(e) der erste und der zweite angereicherte Schwefelsäurestrom gesammelt werden und
(f) der im wesentlichen schwefeltrioxidfreie Gasstrom gesammelt wird, dadurch gekennzeichnet, daß der erste zurückgeführte Schwefelsäurestrom nach dem Gegenstromprinzip zerstäubt wird.

2. Verfahren nach Anspruch 1, bei dem der erste zurückgeführte Schwefelsäurestrom einen größeren Anteil eines zurückgeführten gemeinsamen Schwefelsäurestroms bildet und der zweite zurückgeführte Schwefelsäurestrom einen kleineren Anteil des zurückgeführten gemeinsamen Schwefelsäurestroms bildet.

3. Verfahren nach Anspruch 1, bei dem der erste und der zweite angereicherte Schwefelsäurestrom vereinigt werden.

4. Verfahren nach einem der Ansprüche 1, 2 oder 3, bei dem ferner der Gasstrom in einer Seiten-Zerstäubungskammer, die sich außerhalb des Turms befindet und mit der Schwefelsäure-Zerstäubungskammer verbunden ist, mit einem Teil der ersten zurückgeführten Schwefelsäure bestäubt bzw. besprüht wird, bevor der Gasstrom der Schwefelsäure-Zerstäubungskammer zugeführt wird.

5. Schwefeltrioxid-Absorptionsturm mit

(a) einem Gehäuse,

(b) einer mit Füllkörpern gefüllten Schwefeltrioxid-Absorptionszone, die sich in dem Gehäuse befindet,

(c) einer Einrichtung für die Zuführung eines Schwefelsäurestroms zu der mit Füllkörpern gefüllten Absorptionszone und

(d) einer Einrichtung zum Sammeln eines resultierenden Gasstromes aus der mit Füllkörpern gefüllten Absorptionszone, wobei die Verbesserung des Turmes dadurch gekennzeichnet ist, daß der Turm auch

(e) eine Schwefelsäure-Zerstäubungskammer, die sich in einem unteren Teil des Gehäuses und unterhalb der mit Füllkörpern gefüllten Absorptionszone befindet,

(f) eine Einrichtung zum Zerstäuben eines Schwefelsäurestroms in der Zerstäubungskammer,

(g) eine Einrichtung für die Zuführung eines heißen Gasstroms, der Schwefeltrioxid enthält, zu der Zerstäubungskammer, in der ein verarmter Schwefeltrioxidgasstrom erzeugt wird,

(h) eine Einrichtung für die Zuführung des verarmten Schwefeltrioxidgasstroms zu der mit Füllkörpern gefüllten Absorptionszone und (i) eine Einrichtung zum Sammeln der Schwefelsäureströme aus der Zerstäubungskammer und der Absorptionszone aufweist.

6. Turm nach Anspruch 5, der ferner eine Seiten-Zerstäubungskammer aufweist, die sich außerhalb des Turms befindet und mit der Schwefelsäure-Zerstäubungskammer verbunden ist.

## Revendications

1. Procédé de production d'acide sulfurique concentré à partir d'un courant de gaz chaud contenant de l'anhydride sulfurique, procédé qui consiste:

(a) à faire arriver ledit courant gazeux dans une chambre de pulvérisation d'acide sulfurique contenue dans une tour d'absorption;

(b) à pulvériser un premier courant d'acide sulfurique recyclé dans la chambre de pulvérisation pour effectuer l'absorption d'une proportion dominante dudit anhydride sulfurique dudit courant gazeux dans ledit acide sulfurique recyclé pour produire un premier courant enrichi en acide sulfurique et un courant épuisé en anhydride sulfurique;

(c) à faire arriver ledit courant gazeux d'anhydride sulfurique appauvri dans une zone garnie d'absorption de l'anhydride sulfurique au-dessus de ladite chambre de pulvérisation dans ladite tour d'absorption;

(d) à faire arriver un second courant d'acide sulfurique recyclé dans ladite zone d'absorption d'anhydride sulfurique pour effectuer l'absorption de la quasi-totalité de l'anhydride sulfurique restant dans le courant gazeux d'anhydride sulfurique épuisé pour produire un second courant d'acide sulfurique enrichi et un courant gazeux pratiquement dépourvu d'anhydride sulfurique;

e) à recueillir lesdits premier et second courants enrichis d'acide sulfurique; et

(f) à recueillir ledit courant gazeux pratiquement dépourvu d'anhydride sulfurique,

caractérisé en ce que le premier courant recyclé d'acide sulfurique est pulvérisé selon un mode à contre-courant.

2. Procédé suivant la revendication 1, dans lequel le premier courant recyclé d'acide sulfurique constitue une portion dominante d'un courant recyclé commun d'acide sulfurique et le second courant recyclé d'acide sulfurique constitue une portion secondaire dudit courant recyclé commun d'acide sulfurique.

3. Procédé suivant la revendication 1, dans lequel les premier et second courants d'acide sulfurique enrichis sont réunis.

4. Procédé suivant l'une quelconque des revendications 1 à 3, qui consiste en outre à pulvériser dans ledit courant de gaz une partie du premier acide sulfurique recyclé à l'intérieur d'une chambre latérale de pulvérisation extérieure à la tour et en liaison avec la chambre d'acide sulfurique, avant l'introduction dudit courant de gaz dans ladite chambre d'acide sulfurique.

5. Tour d'absorption d'anhydride sulfurique, comprenant:

(a) une calandre;

(b) une zone garnie d'absorption de l'anhydride sulfurique dans ladite calandre;

(c) des moyens permettant de faire arriver un courant d'acide sulfurique dans ladite zone garnie d'absorption; et

(d) des moyens permettant de recueillir dans ladite zone garnie d'absorption un courant gazeux résultant; le perfectionnement de ladite tour étant caractérisé en ce que cette dernière comprend également

(e) une chambre de pulvérisation d'acide sulfurique dans une partie inférieure de ladite calandre et au-dessous de ladite zone garnie d'absorption;

(f) des moyens permettant de pulvériser un courant d'acide sulfurique à l'intérieur de ladite chambre de pulvérisation;

(g) des moyens permettant de faire arriver un courant de gaz chaud contenant de l'anhydride sulfurique dans ladite chambre de pulvérisation où un courant gazeux d'anhydride sulfurique épuisé est produit;

(h) des moyens permettant de faire arriver ledit courant gazeux d'anhydride sulfurique épuisé dans ladite zone garnie d'absorption; et

(i) des moyens permettant de recueillir lesdits courants d'acide sulfurique dans ladite zone de pulvérisation et dans ladite zone d'absorption.

6. Tour suivant la revendication 5, comprenant en outre une chambre latérale de pulvérisation extérieure à ladite tour et en relation avec ladite chambre de pulvérisation d'acide sulfurique.

EFFLUENT GAS

FIG. 1

FIG.2

FIG.4

FIG.5

FIG.6

EFFLUENT GAS

*FIG.3*

ACID →

ACID

So₃
gas